# EUROPÄISCHE PATENTANMELDUNG

(11) **EP 1 615 089 A1**
(43) Veröffentlichungstag der Anmeldung: **11.01.2006**
(21) Anmeldenummer: 04016244.8
(22) Anmeldetag: 09.07.2004
(51) Int. Cl.: G05B 19/05

(54) **Automatisierungsgerät, Verfahren zum Betrieb eines Automatisierungsgeräts, Verwendung eines Co-Prozessors sowie Verwendung eines Personal Computers mit einem Co-Prozessor**

(71) Anmelder: SIEMENS AKTIENGESELLSCHAFT, 80333 München (DE)
(72) Erfinder: Kleyer, Dieter, 91074 Herzogenaurach (DE); Ott, Wolfgang, 91083 Baiersdorf (DE)

(57) **Zusammenfassung**

Bei einem erfindungsgemäßen Automatisierungsgerät (1) sowie einem Verfahren zum Betrieb eines solchen Automatisierungsgeräts (1) wird Gebrauch gemacht von einem Co-Prozessor (7), mittels welchem mindestens ein Programmmodul (5) eines Steuerungsprogramms (3) ausführbar ist.

Erfindungsgemäß wird ein Co-Prozessor (7) bei einem Automatisierungsgerät (1) zur Steuerung einer technischen Anlage verwendet, wobei mindestens ein von einem Steuerungsprogramm (3) umfasstes Programmmodul (5) mittels des Co-Prozessors (7) ausgeführt wird.

Schließlich führt die Erfindung zu einer Verwendung eines Personalcomputers mit einem Co-Prozessor (7) als Automatisierungsgerät (1) zur Steuerung einer technischen Anlage, wobei auf dem Co-Prozessor (7) mindestens ein Programmmodul (5) eines Steuerungsprogramms (3) abläuft.

## Beschreibung

Automatisierungsgerät, Verfahren zum Betrieb eines Automatisierungsgeräts, Verwendung eines Co-Prozessors sowie Verwendung eines Personal Computers mit einem Co-Prozessor

Die Erfindung betrifft ein Automatisierungsgerät, ein Verfahren zum Betrieb eines Automatisierungsgeräts, eine Verwendung eines Co-Prozessors sowie eine Verwendung eines Personalcomputers mit einem Co-Prozessor.

In vielen modernen Industrieanlagen, beispielsweise Kraftwerksanlagen, spielen Automatisierungsgeräte zur Steuerung der Anlage eine wichtige Rolle.

Die Automatisierungsgeräte übernehmen dabei beispielsweise die automatische Steuerung von Anlagenkomponenten, so dass zum Betrieb der Anlage möglichst wenig menschliches Eingreifen notwendig ist. Dadurch werden insbesondere die Wirtschaftlichkeit und die Sicherheit der technischen Anlage erhöht.

Automatisierungsgeräte können z.B. mittels so genannter speicherprogrammierbarer Steuerungen (SPS) realisiert sein, welche hoch spezialisierte computergesteuerte Einheiten darstellen, welche speziell zur Ausführung von Steuerungsaufgaben ausgebildet sind.

Derartige Automatisierungsgeräte sind computergesteuerte Einheiten, welche speziell für die Ausführung von Steuerungsaufgaben entwickelt und hergestellt sind. Sie arbeiten daher meist sehr schnell, sind aber in ihrer Handhabung und Bedienung komplex und in ihrer Anschaffung sehr kostspielig. Deshalb ist insbesondere in letzter Zeit ein Trend zu beobachten, wonach herkömmliche, weit verbreitete Automatisierungsgeräte auf PC-Basis bei der Steuerung von technischen Anlagen zum Einsatz kommen.

Moderne, für PCs verfügbare Programmiersprachen und Programmiermethoden ermöglichen dabei eine wirtschaftliche Erstellung von System- und Anwendungsprogrammen. Jedoch haben moderne Betriebssysteme und Programmiersprachen, mittels welcher derartige PC-basierte Systeme betrieben werden, einen hohen Speicherplatzbedarf. Zusätzlich benötigen diese Geräte eine hohe Rechenleistung für deren zentrale Verarbeitungseinheit, um das Betriebssystem und die Programmiersoftware zu verwalten. Deshalb steht bei einem Einsatz eines derartigen PC-basierten Systems als Automatisierungsgerät nur ein Teil der Rechenleistung der zentralen Verarbeitungseinheit für die eigentliche Steuerungsaufgabe zur Verfügung. Dies resultiert darin, dass PC-basierte Automatisierungsgeräte im Verbleich zu bekannten speicherprogrammierbaren Steuerungen hinsichtlich ihrer Verarbeitungsgeschwindigkeit deutlich langsamer sind. Dem steht gegenüber, dass viele praktische Erfordernisse, beispielsweise die Automatisierung eines Kraftwerks, sehr kurze Verarbeitungszeiten voraussetzen, um beispielsweise die zu lösenden Regelungsaufgaben mit hoher Regelgüte zu bearbeiten oder um kurze Reaktionszeiten für das Ab-/Zuschalten der Anlagenkomponenten im Störfall zu ermöglichen.

Der Erfindung liegt die daher die Aufgabe zugrunde, ein verbessertes Automatisierungsgerät anzugeben, mittels welchem insbesondere die vorgenannten Nachteile überwunden werden können und welches besonders wirtschaftlich ist.

Die Aufgabe wird erfindungsgemäß gelöst durch ein Automatisierungsgerät umfassend eine zentrale Verarbeitungseinheit, mittels welchem mindestens ein Steuerungsprogramm zur Steuerung einer technischen Anlage ausführbar ist, wobei das Steuerungsprogramm mindestens ein Programmmodul umfasst, welches zur Realisierung einer Steuerungsfunktion mittels eines Steuerungsalgorithmus ausgebildet ist und wobei mindestens ein CO-Prozessor, mittels welchem das Programmmodul ausführbar ist, zum Automatisierungsgerät umfasst ist.

Die Erfindung geht dabei von der Überlegung aus, dass die zentrale Verarbeitungseinheit insbesondere von rechenzeitintensiven Algorithmen entlastet werden sollte, um eine hohe Verarbeitungsgeschwindigkeit des Automatisierungsgeräts zu erreichen. Zu diesem Zweck ist bei der vorliegenden Erfindung der Co-Prozessor vorgesehen, von welchem das Programmmodul ausgeführt wird, welches ein Teil des Steuerungsprogramms ist.

Dadurch wird insbesondere derjenige Nachteils des Stands der Technik überwunden, wonach bei PC-basierten Systemen Steuerungsaufgaben und Kommunikationsaufgaben von der zentralen Verarbeitungseinheit gleichrangig bearbeitet werden, wodurch sich die Verarbeitungszeit für die Steuerungsaufgaben erhöht. Des Weiteren wird auch der Nachteil einer hohen Beanspruchung der zentralen Verarbeitungseinheit durch das Betriebssystem relativiert, da zumindest ein Teil des Steuerungsprogramms nicht von der zentralen Verarbeitungseinheit, sondern vom Co-Prozessor ausgeführt wird.

Vorteilhaft wird dabei während des Betriebs des Automatisierungsgeräts das Programmmodul von der zentralen Verarbeitungseinheit aufgerufen und dieses übermittelt nach Ausführung der Steuerungsfunktion Verarbeitungsergebnisse an die zentrale Verarbeitungseinheit.

Bei dieser Ausführungsform arbeitet der Co-Prozessor als Spezialist bezüglich der Ausführung der Steuerungsfunktion, wobei der Spezialist von der zentralen Verarbeitungseinheit beauftragt wird und seine Ergebnisse nach Ausführung der Steuerungsfunktion zurück an die zentrale Verarbeitungseinheit übermittelt. Die zentrale Verarbeitungseinheit wird daher von der Ausführung von Steuerungsfunktionen entlastet, indem sie diese Aufgabe auf den Spezialisten Co-Prozessor überträgt, wodurch sich die Verarbeitungsgeschwindigkeit des Automatisierungsgeräts deutlich erhöht. Ein weiterer Vorteil besteht darin, dass die Ergebnisse der Steuerungsfunktion damit auch deterministisch werden, was insbesondere bei sicherheitsrelevanten Steuerungsaufgaben unverzichtbar ist.

Die Begriffe Steuerung/Steuerungsaufgabe/Steuerungsfunktion/Steuerungsprogramm sollen im Zusammenhang mit der vorliegenden Erfindung auch Regelungen und deren Realisierung in softwaretechnischer Form umfassen.

Das Steuerungsprogramm umfasst weiterhin bevorzugt mindestens zwei unterschiedliche Arten an Programmmodulen.

Eine Art eines Programmmoduls kann beispielsweise auf die Organisation und Ablaufkoordination des Steuerungsprogramms spezialisiert sein und umfasst selbst keine Steuerungsfunktion (Organisationsbaustein) . Eine weitere Programmmodul kann beispielsweise die Bearbeitung der eigentlichen Steuerungsfunktion beinhalten, beispielsweise die softwaretechnische Realisierung eines Regelungsalgorithmus (Funktionsbaustein). Andere Arten können beispielsweise lediglich Speicherorte für Ein- oder Ausgabedaten sein, welche von anderen Programmmodulen benötigt bzw. erzeugt werden (Datenbaustein). Wieder andere Arten können spezialisiert sein auf die Realisierung von Schrittsteuerungen (Schrittbausteine) und eine letzte Art an Programmmodulen kann eine softwaretechnische Realisierung eines Steuerungsprogramms sein, worin eine komplexe Steuerungsaufgabe gelöst ist und dabei üblicherweise zur Abarbeitung von Teilfunktionen andere Programmmodule aufgerufen werden, welche ihre Verarbeitungsergebnisse als Zwischenergebnisse zur Verfügung stellen (Programmbaustein) .

Bei dieser Ausführungsform stehen eine Reihe an unterschiedlichen Arten an Programmmodulen zur Verführung, welche zur Abarbeitung auf dem Co-Prozessor bestimmt werden können, um die Verarbeitungsgeschwindigkeit des Automatisierungsgeräts insgesamt zu erhöhen.

Programmmodule, welche nicht sehr rechenzeitintensiv sind, können beispielsweise von einer Verarbeitung durch den Co-Prozessor ausgeschlossen werden, da dadurch keine nennenswerte Erhöhung der Verarbeitungsgeschwindigkeit des Automatisierungsgeräts insgesamt zu erwarten ist.

Daher werden insbesondere komplexe Programmmodule auf dem Co-Prozessor verarbeitet.

Bevorzugt umfasst das Programmmodul mindestens einen Funktionsbaustein oder/und einen Organisationsbaustein oder/und einen Datenbaustein oder/und einen Schrittbaustein oder/und einen Programmbaustein.

Die vorgenannten Bausteine sind aus dem technischen Gebiet der Speicherprogrammierbaren Steuerungen (SPS) bekannt und jedem Fachmann geläufig; des weiteren wurden deren jeweilige Hauptfunktionalitäten im Zusammenhang mit einem vorangegangenem vorgenannten Ausführungsbeispiel bereits exemplarisch angeführt.

Besonders geeignet zur Ausführung auf dem Co-Prozessor ist dabei ein Funktionsbaustein, mittels welchem ein Steuerungsalgorithmus realisiert ist.

Üblicherweise ist die eigentliche und meist auch komplexe Lösung für eine Steuerungsaufgabe mittels eines mathematischen, beispielsweise numerischen, Algorithmus programmiert und in mindestens einem Funktionsbaustein im Automatisierungsgerät implementiert. Wir nun die Abarbeitung eines derartigen Funktionsbausteins auf den Co-Prozessor verlagert, so ist eine deutliche Erhöhung der Verarbeitungsgeschwindigkeit des Automatisierungsgeräts zu erwarten.

Diese meist komplexen Funktionsbausteine werden von einem Anwendungsprogramm, welches in der zentralen Verarbeitungseinheit abläuft, aufgerufen und sie liefern nach der Beendigung ihrer Ausführung ihre Ergebnisse zurück an das Anwendungsprogramm in der zentralen Verarbeitungseinheit, ähnlich dem bekannten Mechanismus bei der Auslagerung der Durchführung mathematischer Operationen auf einen speziellen Arithmetik-Co-Prozessor eines Personalcomputers.

Ein weiterer Vorteil ist darin zu sehen, dass während der Abarbeitung des Funktionsbausteins durch den Co-Prozessor die zentrale Verarbeitungseinheit parallel andere Steuerungsaufgaben des Automatisierungsgeräts wahrnehmen kann, wie beispielsweise das Einlesen oder das Ausgeben von Ein- bzw. Ausgabedaten, die Abarbeitung von solchen Steuerungsfunktionen, welche von der zentralen Verarbeitungseinheit selbst bearbeitet werden, oder sogar andere Funktionsbausteine, die von der zentralen Verarbeitungseinheit selbst bearbeitet werden.

Deshalb ist das Automatisierungsgerät besonders bevorzugt ausgebildet als ein Personalcomputer mit bekannter Rechnerarchitektur.

Da das Automatisierungsgerät meist echtzeitfähig sein muss, ist eine unmittelbare und ununterbrochene Bearbeitung des Funktionsbausteins durch den Co-Prozessor notwendig, so dass die Verarbeitungsergebnisse in möglichst kurzer Zeit zur Verfügung stehen. Diese Anforderung ist durch den Co-Prozessor erfüllbar.

Komplex aufgebaute Funktionsbausteine sollten daher auf dem Co-Prozessor unter optimaler Ausnutzung dessen Ressourcen ausgeführt werden. Aus diesem Grunde umfasst der Co-Prozessor bevorzugt kein rechenzeitintensives, eigenes Betriebssystem sondern höchstens einfache Routinen, mittels welcher der Datenaustausch mit der zentralen Verarbeitungseinheit bewerkstelligt wird. In diesem Falle steht die mittels des Co-Prozessors realisierte Funktionalität des auf diesen ausgelagerten Funktionsbausteins praktisch ständig zur Verfügung ("Run-Forever-Mode").

Bei einer weiteren vorteilhaften Ausgestaltung der Erfindung ist der Co-Prozessor ein universell einsetzbarer Co-Prozessor, welcher bevorzugt als Massenprodukt aus Serienfertigung erhältlich ist.

Derartige Co-Prozessoren, welche frei programmierbar sind, stehen am Markt zur Verfügung, beispielsweise zur Integration von Anwendungen unter dem PC-Betriebssystem Windows.

Besonders bevorzugt unterstützt ein derartiger Co-Prozessor den so genannten "8086-Real-Mode". Dadurch wird die Übertragung von bereits programmtechnisch erstellten Funktionsbausteinen auf SPS-Basis auf den Co-Prozessor wesentlich erleichtert.

In einer weiteren besonders bevorzugten Ausführungsform umfasst das Automatisierungsgerät ein Automatisierungssystem aus der Gruppe {Windows, UNIX, LINUX}.

Dann ist es möglich, dass der Funktionsbaustein beispielsweise als Windows-Anwendung ohne aufwendiges eigenes Betriebssystem ablaufen kann.

Die zentrale Verarbeitungseinheit kann eine so genannte PCI-Busschnittstelle oder/und eine AGP-Schnittstelle aufweisen und der Co-Prozessor kommuniziert über mindestens eine dieser Schnittstellen mit der zentralen Verarbeitungseinheit.

Viele bekannte zentrale Verarbeitungseinheiten für Personalcomputer weisen mindestens eine dieser Schnittstellen auf. Besonders bevorzugt wird die PCI-Busschnittstelle für den Anschluss des Co-Prozessors verwendet.

Die AGP-Schnittstelle wird im Stand der Technik üblicherweise zur Ansteuerung von Grafik-Controllern genutzt. Aber auch diese Schnittstelle kann für den Anschluss des Co-Prozessors genutzt werden.

Die Erfindung führt weiterhin zu einem Verfahren zum Betrieb eines Automatisierungsgeräts, mit einer zentralen Verarbeitungseinheit, mittels welchem mindestens ein Steuerungsprogramm zur Steuerung einer technischen Anlage ausgeführt wird, wobei das Steuerungsprogramm mindestens ein Programmmodul umfasst, welches zur Realisierung einer Steuerungsfunktion mittels eines Steuerungsalgorithmus ausgebildet ist, wobei das Programmmodul mittels eines Co-Prozessors des Automatisierungsgerät ausgeführt wird.

Bevorzugt wird dabei das Programmmodul von der zentralen Verarbeitungseinheit aufgerufen und dieses übermittelt nach Ausführung der Steuerungsfunktion Verarbeitungsergebnisse an die zentrale Verarbeitungseinheit.

Besonders bevorzugt ist das Programmmodul ein Funktionsbaustein und/oder das Automatisierungsgerät ist ein Personalcomputer.

Weiterhin wird als Co-Prozessor bevorzugt ein universell einsetzbarer Co-Prozessor verwendet, welcher bevorzugt als Massenprodukt aus Serienfertigung erhältlich ist.

Ein bevorzugtes Betriebssystem des Automatisierungsgeräts ist ein Betriebssystem aus der Gruppe {Windows, UNIX, LINUX}.

Die Erfindung führt weiterhin zur Verwendung eines Co-Prozessors bei einem Automatisierungsgerät zur Steuerung einer technischen Anlage, wobei mindestens ein von einem Steuerungsprogramm umfasstes Programmmodul mittels des Co-Prozessors ausgeführt wird.

Schließlich führt die Erfindung zur Verwendung eines Personalcomputers mit einem Co-Prozessor als Automatisierungsgerät zur Steuerung einer technischen Anlage, wobei auf dem Co-Prozessor mindestens ein Programmmodul eines Steuerungsprogramms abläuft.

Im Folgenden wird ein Ausführungsbeispiel der Erfindung näher dargestellt.

Es zeigt:
FIG ein erfindungsgemäßes Automatisierungsgerät.

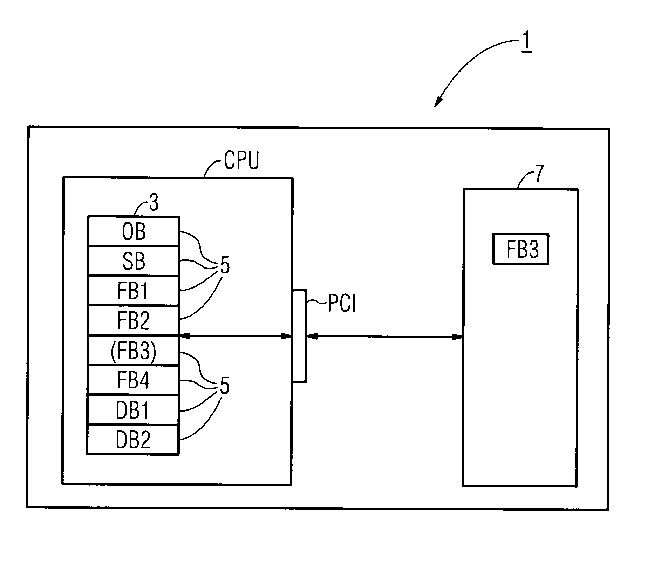

In der Figur ist ein Automatisierungsgerät 1 dargestellt, welches eine zentrale Verarbeitungseinheit CPU sowie einen CO-Prozessor 7 aufweist.

Das Automatisierungsgerät 1 ist zur Steuerung einer nicht näher dargestellten technischen Anlage ausgelegt.

Zur Erfüllung der Steuerungsaufgaben weist das Automatisierungsgerät 1 ein Steuerungsprogramm 3 auf.

Dieses Steuerungsprogramm 3 umfasst eine Anzahl an Programmmodulen 5, welche ausgebildet sind als ein Organisationsbaustein OB, ein Schrittbaustein SB, vier Funktionsbausteine FB1,FB2,FB3,FB4 und zwei Datenbausteine DB1, DB2.

Die Funktionsbaustein FB1,FB2,FB3,FB4 realisieren jeweils einen Steuerungsalgorithmus als softwaretechnische Lösung einer Steuerungsaufgabe oder Teilaufgabe.

Die anderen Programmmodule 5 dienen im Gegensatz dazu eher zur Organisation des Steuerungsablaufs bzw. zur Organisation der Datenhaltung als zur tatsächlichen Durchführung der Steuerung.

Im vorliegenden Ausführungsbeispiel soll der Funktionsbaustein FB3 besondere komplex sein und daher eine besonders hohe Rechenleistung erfordern.

Zur Abarbeitung dieses Funktionsbausteins FB3 werden die für diesen Baustein erforderlichen Eingabedaten mittels einer PCI-Schnittstelle PCI an den Co-Prozessor 7 übermittelt, in welchem mindestens der Steueralgorithmus des Funktionsbausteins FB3 implementiert ist. Der Co-Prozessor 7 übermittelt die Verarbeitungsergebnisse des Funktionsbausteins FB3 zurück an die zentrale Verarbeitungseinheit CPU, so dass diese im vorliegenden Ausführungsbeispiel von der Abarbeitung des Funktionsbausteins FB3 entlastet ist.

Der Co-Prozessor 7 kann auch für die Abarbeitung von mehreren Funktionsbausteinen oder anderen Arten an Bausteinen vorgesehen sein, so dass eine weitere Optimierung der Verarbeitungsgeschwindigkeit des Automatisierungsgeräts 1 erreicht werden kann.

Zusammenfassend lässt sich die Erfindung folgendermaßen umreißen:
Der Einsatz eines Co-Prozessors als Prozessor zur Abarbeitung, insbesondere eines Funktionsbausteins, ermöglicht eine erhebliche Steigerung der Verarbeitungsgeschwindigkeit, besonders bei PC-basierten Automatisierungsgeräten.

## Patentansprüche

1. Automatisierungsgerät (1) umfassend eine zentrale Verarbeitungseinheit (CPU), mittels welchem mindestens ein Steuerungsprogramm (3) zur Steuerung einer technischen Anlage ausführbar ist, wobei das Steuerungsprogramm (3) mindestens ein Programmmodul (5) umfasst, welches zur Realisierung einer Steuerungsfunktion mittels eines Steuerungsalgorithmus ausgebildet ist,
**gekennzeichnet durch**
mindestens einen Co-Prozessor (7), mittels welchem das Programmmodul (5) ausführbar ist.

2. Automatisierungsgerät (1) nach Anspruch 1,
**dadurch gekennzeichnet, dass**
während des Betriebs das Programmmodul (5) von der zentralen Verarbeitungseinheit (CPU) aufgerufen wird und dieses nach Ausführung der Steuerungsfunktion Verarbeitungsergebnisse an die zentrale Verarbeitungseinheit (2) übermittelt.

3. Automatisierungsgerät nach Anspruch 1 oder 2,
**dadurch gekennzeichnet, dass**
das Steuerungsprogramm (3) mindestens zwei unterschiedliche Arten an Programmmodulen (5) umfasst.

4. Automatisierungsgerät nach Anspruch 3,
**dadurch gekennzeichnet, dass**
das Programmmodul (5) mindestens einen Funktionsbaustein (FB1,FB2,FB3,FB4) oder/und einen Organisationsbaustein (OB) oder/und einen Datenbaustein (DB1,DB2) oder/und einen Schrittbaustein (SB) oder/und einen Programmbaustein umfassen.

5. Automatisierungsgerät nach Anspruch 4,
**dadurch gekennzeichnet, dass**
das Programmmodul (5) ein Funktionsbaustein (FB) ist.

6. Automatisierungsgerät (1) nach einem der Ansprüche 1 bis 5,
**dadurch gekennzeichnet, dass**
das Automatisierungsgerät (1) als ein Personal Computer (PC) ausgebildet ist.

7. Automatisierungsgerät nach einem der Ansprüche 1 bis 6,
**dadurch gekennzeichnet, dass**
der Co-Prozessor (7) ein universell einsetzbarer Co-Prozessor ist, welcher bevorzugt als Massenprodukt aus Serienfertigung erhältlich ist.

8. Automatisierungsgerät (1) nach Anspruch 6 oder 7,
**dadurch gekennzeichnet, dass**
das Automatisierungsgerät (1) ein Betriebssystem aus der Gruppe {Windows, UNIX, LINUX} umfasst.

9. Automatisierungsgerät (1) nach einem der Ansprüche 6 bis 8,
**dadurch gekennzeichnet, dass**
die zentrale Verarbeitungseinheit (CPU) eine PCI-Busschnittstelle (PCI) oder/und eine AGP-Schnittstelle aufweist und der Co-Prozessor (7) über mindestens eine dieser Schnittstellen mit der zentralen Verarbeitungseinheit kommuniziert.

10. Verfahren zum Betrieb eines Automatisierungsgeräts (1), mit einer zentralen Verarbeitungseinheit (CPU), mittels welchem mindestens ein Steuerungsprogramm (3) zur Steuerung einer technischen Anlage ausgeführt wird, wobei das Steuerungsprogramm (3) mindestens ein Programmmodul (5) umfasst, welches zur Realisierung einer Steuerungsfunktion mittels eines Steuerungsalgorithmus ausgebildet ist,
**dadurch gekennzeichnet, dass**
das Programmmodul (5) mittels eines Co-Prozessors (5) des Automatisierungsgeräts (1) ausgeführt wird.

11. Verfahren nach Anspruch 10,
**dadurch gekennzeichnet, dass**
das Programmmodul (5) von der zentralen Verarbeitungseinheit (CPU) aufgerufen wird und dieses nach Ausführung der Steuerungsfunktion Verarbeitungsergebnisse an die zentrale Verarbeitungseinheit (2) übermittelt.

12. Verfahren nach Anspruch 11,
**dadurch gekennzeichnet, dass**
das Programmmodul (5) ein Funktionsbaustein (FB) ist.

13. Verfahren nach einem der Ansprüche 10 bis 12,
**dadurch gekennzeichnet, dass**
das Automatisierungsgerät ein Personal Computer (PC) ist.

14. Verfahren nach einem Ansprüche 10 bis 13,
**dadurch gekennzeichnet, dass**
der Co-Prozessor (7) ein universell einsetzbarer Co-Prozessor ist, welcher bevorzugt als Massenprodukt aus Serienfertigung erhältlich ist.

15. Verfahren nach einem Ansprüche 10 bis 14,
**dadurch gekennzeichnet, dass**
das Automatisierungsgerät (1) mittels eines Betriebssystems aus der Gruppe {Windows, UNIX, LINUX} betrieben wird.

16. Verwendung eines Co-Prozessors (7) bei einem Automatisierungsgerät (1) zur Steuerung einer technischen Anlage, wobei mindestens ein von einem Steuerungsprogramm (3) umfasstes Programmmodul (5) mittels des Co-Prozessors (7) ausgeführt wird.

17. Verwendung eines Personal Computers mit einem Co-Prozessor (7) als Automatisierungsgerät (1) zur Steuerung einer technischen Anlage, wobei auf dem Co-Prozessor (7) mindestens ein Programmmodul (5) eines Steuerungsprogramms (3) abläuft.
